# EUROPEAN PATENT APPLICATION

(11) **EP 1 492 018 A1**
(43) Date of publication of application: **29.12.2004**
(21) Application number: 03014741.7
(22) Date of filing: 27.06.2003
(51) Int. Cl.: G06F 17/30, G06T 11/20, G06F 17/60

(54) **Computer-implemented method and system for accessing, processing and outputting data**

(71) Applicant: SAP AG, 69190 Walldorf (DE)
(72) Inventor: Feco, Richard, 69207 Sandhausen (DE); Reiner, Robert, Dr., 69207 Sandhausen (DE)
(74) Representative: Schmidt, Steffen J., Dipl.-Ing.

(57) **Abstract**

A computer system provides a device in a computer to generate a request to a first database in order to obtain additional numerical information related to a data object representing a subject of interest to a user, with partial information related to the subject of interest already being presented to the user. The request includes information sufficiently characterising the subject of interest to allow for an identification of additional information related to the subject of interest available in the first database. This request is submitted by a device in the computer to the database. The received additional information is processed by a device in the computer in order to generate a result which in turn is displayed indicating a current value in relation to a predetermined value related to the data object of the subject of interest to the user. This ascertains that the data is presented to the user in the right format at the right point of a process.

## Description

### FIELD OF THE INVENTION

The present invention relates to a computer-implemented system for accessing, processing, and outputting data. More particularly, the invention relates to a system where data held in one or more data bases or other data repositories is accessed upon user interaction with the computer, processed to meet certain criteria, and the process result is displayed on the computer screen.

### BACKGROUND OF THE INVENTION

In complex IT (information technology) environments where different software program applications are utilized in a computer network to implement business processes accessible by different users, it can be difficult to verify whether certain data or a certain data object is complete, valid and/or whether all aspects derivable from a certain data object are considered. This may result in data obtained from different users, sources, data bases or data repositories, entered at different times, or even with different statuses (e.g. reserved, assigned, nominal value, etc.) not being correctly used or displayed.

More specifically, e.g. in a financial controlling/budgeting application program, in a material resource planning/controlling application program, or the like, an accounting object representing a purchase/sales order, a budget, or an amount of staple products, is provided to a user on a screen, in a data printout, or the like. This accounting object presented to a user can be the basis for further decisions; that is, e.g. whether a budget can be debited further, whether there is enough material in the supply stock so that the production of a certain quantity of goods using that material can be initiated, etc.

However, if the accumulated budget is exceeded in the data base when posting a purchase order, a user will only receive an error message that this purchase order can not be posted. There is no additional information available why and to which extent the posting is not possible. In order to find out why the budget would be exceeded by this posting, a user would have to start entirely different application programs. To the user, this means to carry out new login procedures, find the right information in the respective application programs, analyse it, and return to the original application program in order to continue the task. Not only is this very labourious. It also interrupts the user in the process of carrying out his/her tasks and is very time consuming.

There is a need for a technical environment which allows for an improved information management. More specifically, there is a need for appropriately configured network components like computer workstations and a method of controlling such network components which allow for a fast, efficient and secure processing of information the above mentioned kinds.

This holds especially true when in a large - and often times geographically and structurally distributed - organisation several content providing network systems serving different and/or overlapping purposes and user groups of the organisation coexist within said organisation that store and retrieve data in an timewise unpredicted fashion.

A technical problem resides in the fact that heretofore, there is no effective means of easily providing a clear and true image of a situation when one or more data sources provide different data related to that situation. This problem is increased when such data is part of a more complex data set in an environment having different software applications which can be used to enter or modify the data in different ways. Also, the users have to be trained in use the of the different software applications that may have disparate user interfaces due to their different origin and purposes. Further, many software applications do not support an immediate access by a user to their data in order to allow for a complete and accurate presentation of a situation (e.g. a budget). Rather, the user has to take a predefined route within that software application to reach the presentation of the data of interest.

Another aspect of the technical problem underlying the invention is the fact that the present approach in the situation described above also requires the additional loading and running of at least one further application program in the user's computer. This, however, necessitates the provision of enough memory in the user's computer. It also causes additional traffic in the network to which the user's computer and the server where the various application programs are hosted are connected in order to communicate the application programs and the respective data to the user's computer.

### SUMMARY OF THE INVENTION

According to an aspect of the invention, the above-mentioned short-coming is satisfied by a computer-implemented method of accessing, processing, and outputting data in a computer network providing a computer program product capable of presenting on a graphical output device a data object containing one or more data items related to a subject of interest to the user; providing on said graphical output device a first control element in relation to said presented data object, said first control element being arranged to be activated by means of a user-operated input device in order to generate a first control signal; upon generation of said first control signal, generating a request to a first database in order to obtain additional numerical information related to said subject of interest, said request including information sufficiently characterising said subject of interest to allow for an identification of additional numerical information related to said subject of interest available in said first database; submitting said request to said database via said computer network; receiving said additional numerical information related to said item of interest via said computer network from said database; processing said received information in order to generate a numerical result; and displaying said generated numerical result on said graphical output device in a display indicating a current value in relation to a predetermined maximum and/or a minimum value related to said data object of the subject of interest to the user.

The invention can also be defined as a computer-implemented system for accessing, processing, and outputting data in a computer network comprising at least one computer that can be operated by a user and that is provided with a device in the computer for generating a request to a first database in order to obtain numerical information related to a data object representing a subject of interest to a user, while some information related to the subject of interest already being presented to the user. The request includes information sufficiently characterising the subject of interest to allow for an identification of said information related to the subject of interest available in the first database. This request is being submitted by a device in the computer to the database. The received additional information is being processed by a device in the computer in order to generate a result which in turn is displayed indicating a current value in relation to a predetermined value related to the data object of the subject of interest to the user.

The invention allows for a efficient data access and for a presentation of the accessed information in accordance with a granularity selected by the user.

This is in contrast to currently available systems and methodologies where the user must interrupt the working in a first software application and enter a second software application to obtain the data necessary for a decision-making or an understanding of the situation present in the first software application.

The concept of the present invention approaches this problem in that it obtains the data desired in the first software application by directly accessing - via the second software application - the data base of the second software application without the user being required to carry out the actions necessary to "manually" find and retrieve the data available in the second software application.

This minimises the memory requirements and the software overhead on the server's as well as on the user workstations' side. Further, it enhances the ease-of-use and contributes to a coherent presentation of the data.

The displaying of said generated numerical result on said graphical output device can further include presenting a graphic indicator in said display indicating a range between said predetermined maximum and said predetermined minimum value as a graphical element like a bar, wherein said current value is indicated as a change in color, size, shape, or texture of said graphical element.

The displaying of said graphic indicator can include that a first portion of said graphical element representing a first subrange between said predetermined minimum value and said current value has a first color, size, shape, or texture, and that a second portion of said graphic indicator representing a second subrange between said predetermined maximum value and said current value has a second color, size, shape, or texture.

Further, the displaying of said graphic indicator in said display can include that the color, size, shape, or texture of the first and/or the second portion changes if said current value exceeds certain predetermined values relative to said predetermined minimum value and/or said predetermined maximum value.

Displaying said graphic indicator in said display can also include displaying a numerical presentation of said current value in close proximity to said graphic indicator if said input device is user-operated to identify said graphic indicator.

Generating said request can include providing at least an accounting assignment identification and an amount related to said subject of interest, in order to allow for an identification of a total amount and an assigned amount in said first database.

Generating said request can include providing the information identifying said subject of interest to said first database in the format of a unique resource locator, a unique resource identifier, hyper text markup language, extensible markup language, extensible hyper text markup language, wireless application markup language, Electronic Data Interchange, a Remote Function Call, or via an application programming interface.

For receiving said additional numerical information from said first database the same techniques as for generating said request can include providing the information identifying said subject of interest to said first database can be used.

Providing a second control element in relation to said presented data object on said graphical output device can also be effected. Said second control element being arranged to be activated by means of the user-operated input device in order to generate a second control signal. This allows for displaying further, e.g. historical information related to said subject of interest received at least partially from said first or a second database upon generation of said second control signal.

A checking procedure regarding the authorization of the user to access and/or visualize the additional information received at least partially from said database can be carried ourt prior to providing the first and/or the second control elements on said graphical output device.

Generating a second request to a second database can be effected in order to obtain additional information related to said subject of interest, said second request including information sufficiently characterising said subject of interest to allow for an identification of additional information related to said subject of interest available in said database upon generation of said second control signal; submitting said second request to said second database via said computer network; receiving said additional information related to said item of interest via said computer network from said second database; and processing said received information in order to visualize the additional information received at least partially from said second database on said graphical output device.

The invention is also related to a computer-implemented system for accessing, processing, and outputting data in a computer network comprising at least one computer that can be operated by a user and that is suited to run an application software program in accordance with user input actions, provided with a computer program product carrying out the method as described above.

### BRIEF DESCRIPTION OF THE DRAWINGS

Further details, embodiments, modifications or enhancements of the present invention may be obtained from consideration of the following description of various illustrative embodiments of the invention in conjunction with the drawings in which:
Fig. 1 is a schematic diagram illustrating the data processing system used in accordance with the present invention;
Fig. 2 is a schematic diagram illustrating a three-tiered client/server architecture usable as a system to operate the present invention;
Fig. 3 is a flowchart illustrating the methodology of the present invention;
Fig. 4 is a schematic diagram illustrating a Graphical User Interface (GUI) as it can be presented to a user by the system in accordance with the present invention;
Fig. 5 is a schematic diagram illustrating possible appearances of a graphic bar in the Graphical User Interface (GUI) of Fig. 4.

### DETAILED DESCRIPTION OF EMBODIMENTS OF THE INVENTION

Where appropriate, the same reference numbers will be used throughout this detailed description in conjunction with the drawings to refer to the same or like parts.

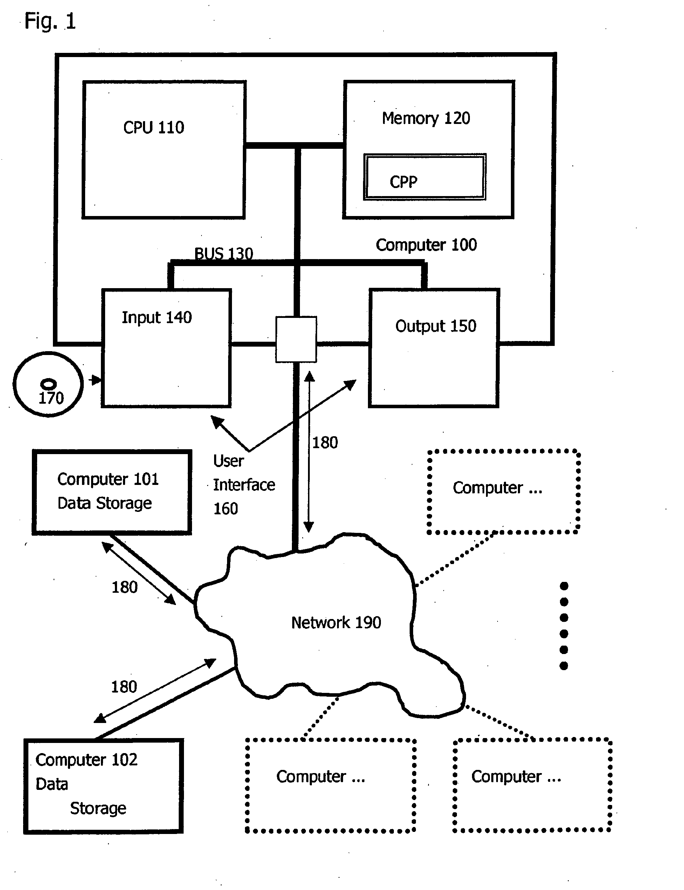

Fig. 1 illustrates a simplified block diagram of a computer network system 10 according to the present invention having a plurality of computer workstations 100, 101, 102 .... The computer workstations 100, 101, 102 ... can be coupled via an (inter-computer) network 190. Each computer workstation 100, 101, 102 ... comprises a processor 110, a memory 120, a bus 130, and, optionally, one or more input devices 140 and output devices 150 (I/O devices) acting as user interface 160, interoperating in a conventionally known manner. The present invention is embodied in a computer program product (hereinafter CPP) residing on a program carrier 170 and/or the memory 120, and generating program signals 180, collectively called a "program".

The computer workstations 101, 102 ... are also referred to as "remote computers". The computer workstations 100, 101, 102 ..., can be, for example, servers, routers, peer devices or other common network nodes, and typically may comprise many or all of the elements described with respect to the computer workstation 100. Hence, the elements 110-180 in the computer workstation 100 collectively illustrate also corresponding elements in the other computer workstations of the network 190.

The computer workstation 100 can be, for example, a conventional personal computer (PC), a desktop or a hand-held device, a multiprocessor computer, a microprocessor-based or programmable consumer electronics device, a minicomputer, a mainframe computer, a personal mobile computing device, a mobile telephone, a portable or stationary personal computer, a palmtop computer or the like.

The processor 110 can be, for example, a central processing unit (CPU), a micro-controller unit (MCU), digital signal processor (DSP), or the like. The memory 120 symbolizes elements or components that temporarily or permanently can store data and instructions. Although the memory 120 is conveniently illustrated as a part of the computer workstation 100, a memory function can also be implemented as a node in the network 190, in the other computers of the network, in the processor 110 itself (e.g., cache, register), or elsewhere.

The memory 120 can be a read only memory (ROM), a random access memory (RAM), or a memory with other access options or capabilities. The memory 120 may be physically implemented as machine-accessible media, such as, for example: magnetic media, like a hard disk, a floppy disk, or other magnetic disk, a tape, a cassette tape; optical media, like an optical disk (CD-ROM, digital versatile disk - DVD); semiconductor media, like DRAM, SRAM, EPROM, EEPROM, a memory stick, or by any other media. Optionally, the memory 120 is distributed across different media. Portions of the memory 120 can be removable or non-removable. For reading from media and for writing into media, the computer 100 uses devices well known in the art such as, for example, disk drives, tape drives, memory card or memory stick reader/writers, etc.

The memory 120 can store software program support modules such as, for example, a basic input output system (BIOS), an operating system (OS), a program library, a compiler, an interpreter, communication programs, driver, protocol converters, application software programs like textprocessors, (Internet-) browsers, data base applications etc.

The CPP comprises program instructions and - optionally - data or variables that cause processor 110 to execute the steps forming the methodology of the present invention. The method steps are explained in greater detail below. The CPP defines and controls the operation of the computer workstation 100 and its interaction in the network system 190. For example, and without the intention to be limiting, the CPP can be available as source code in any programming language, and as object code ("binary code") in a compiled presentation. Persons of ordinary skill in the art can use the CPP in connection with any of the above mentioned support modules.

Although the CPP is illustrated as being stored in memory 120, the CPP can also be located elsewhere. For example, the CPP can also be embodied on the program carrier 170.

The program carrier 170 is illustrated as being outside the computer workstation 100. For communicating the CPP to the computer 100, the program carrier 170 is conveniently inserted into the input device 140. The carrier 170 is implemented as any computer readable medium, such as one of the media explained above (cf. memory 120). Generally, the program carrier 170 is an article of manufacture comprising a computer readable medium having computer readable program code means embodied therein for executing the method of the present invention. Further, the program signal(s) 180 can also embody the CPP. The signals 180 travel on the inter-computer network 190 to and from the computer workstation 100. The steps of the computer program product CPP can be executed solely in the computer workstation 100 or can be executed in a distributed manner in one or more of the computers in the network, respectively.

The input device 140 is a device that provides data and instructions for being processed by the computer workstation 100. For example, the device 140 can be a keyboard, a pointing device (e.g., mouse, trackball, cursor direction keys), microphone, joystick, game pad, scanner, etc. While these examples are devices requiring human interaction, the device 140 can also operate without human interaction, such as a wireless receiver (e.g. with satellite dish or terrestrial antenna), a sensor (e.g. a thermometer), a counter (e.g. goods counter in a factory), etc. The input device 140 can also serve to retrieve the program code of the CPP from the program carrier 170.

The output device 150 is a device that presents instructions and data that have been processed. It can be, for example, a monitor or display, cathode ray tube (CRT), flat panel display, liquid crystal display (LCD), speaker, printer, plotter, vibration alert device, etc. Similar to the input device 140 above, the output device 150 mainly communicates with the user(s), but it can also communicate with further computers or devices.

The input device 140 and the output device 150 can be combined into a single device.

The bus 130 and the inter-computer network 190 provide logical and physical connections by conveying instruction and data signals. While connections and communications inside the computer workstation 100 are conveniently handled by the bus 130, connections and communications between different computers are handled by the network 190. Optionally, the network 190 comprises gateways and routers being computers that are dedicatedly programmed to effect data transmission and protocol conversion.

The input/output devices 140 and 150 are coupled to the computer workstation 100 by the bus 130 (as illustrated) or by the network 190 (optional). While the signals inside computer workstation 100 can be mostly electrical signals, the signals in the network can be electrical, magnetic, optical or wireless (radio) signals.

Networking environments as the network 190 are commonplace in offices, enterprise-wide computer networks, intranets or the Internet (i.e. world wide web). The world wide web (www) represents all of the computers on the Internet that offer users access to information on the Internet via interactive documents or Web pages. Web information resides on Web servers on the Internet or within company or community networks (intranets). Network 190 can be a wired or a wireless network, such as, for example, a local area network (LAN), a wide area network (WAN) or a wireless LAN (WLAN), a public switched telephone network (PSTN); an Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols, mechanisms and data formats to effect communications between computers which are connected to and by the network are known, for example, as transmission control protocol/internet protocol (TCP/IP), hyper text transfer protocol (HTTP), secure HTTP, wireless application protocol (wap), unique resource locator (URL), unique resource identifier (URI), hyper text markup language HTML, extensible markup language (XML), extensible hyper text markup language (XHTML), wireless application markup language (WML), Electronic Data Interchange (EDI), wich is an electronic exchange of business information between or inside organizations and their IT infrastructure in a structured format, Remote Function Call (RFC), or via an application programming interface (API) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

The functionalities of the computer and of the program are closely related. Phrases, such as "the computer provides" or "the program provides", are used hereinafter to express actions by one or more computers that is/are controlled by a computer program product in accordance with the invention. The software and the hardware infrastructure of an embodiment of the invention utilize the computer workstation 100 having the graphical display unit 150 and the graphical input unit 140, e.g. a mouse or a trackball. The computer workstation 100 is connected to a wide area network (WAN) 190, for operating in an intranet and for providing access to the Internet to which a number of members of a group of the similar or identical computer workstations 101, 102, ... are also connected. In order to operate the CPP according to the invention, one of the computer workstations 101, 102, ... acts a host server having an archival data storage for access by the group. In addition to its server tasks, the host server may also provide firewall functions, authenticate the distributed client computer workstations connected to the computer network, etc.

The CPP according to the present invention can be part of a complex software system embedded in a hardware structure. The cooperation of the software system and the hardware structure is sometimes referred to as the information technology (IT) backbone system of large corporations, organizations in the public sector, etc. The backbone system can have a layered structure with individual software components acting as service providers, service requesters, or both. These software components can communicate with each other via predefined (hardware and software) interfaces.

The lower layer may include the network, the physical database and the operating system for the computers in the network. The middle layer interfaces with the lower layer and integrates the software applications in the upper layer above it. This middle layer may include components like software tools, system administration tools, data handling tools, authorization and security management, cross-application modules, and a system kernel. The system kernel can use communications and application program interfaces to access the application software , the operating system, the database, and the network. This system kernel can operate independently from the applications and is located "under" the application program software and the data layers of the software system.

The upper layer contains the different software applications, like financial, human resources, sales and distribution, materials management, manufacturing, etc. Thus, the software applications effectively mirror the business processes and provide the various functions and means to carry out the business.

One approach that allows the distribution of the workload of a computer applica-tion across several cooperating computers and computer programs is the client/ server approach. This type of computing separates user-oriented, application, and data management tasks. In this architecture, application servers can work in parallel and communicate with the database. This allows for a more even distribution of users/user groups/jobs/tasks between the available resources. Also, there is the possibility of deploying dedicated application servers to specific users/user groups/ jobs/tasks. Further, it is possible to adapt the capacity of their hardware according to the performance needs of their businesses, such as adding additional application servers when there is an increase in number of users, when additional modules start production, and when the database becomes larger. This enables companies to protect software and hardware investments.

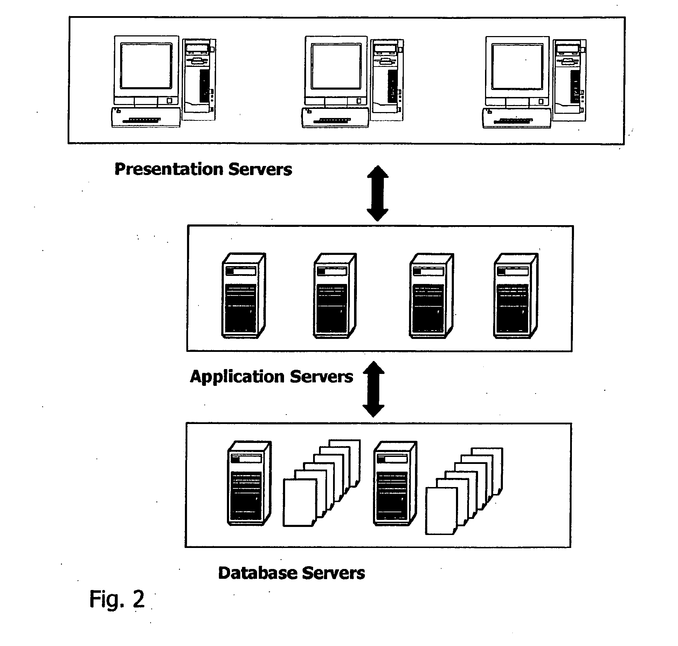

One possible client/ server configuration in which the present invention can be carried out is the so-called three-tiered architecture which separates a system's computers into three function groups: presentation, application, and database. This is illustrated in Fig. 2. As client/server is a software/hardware architecture concept, an application server can include the software components that make up the provider services for the presentation, acting as a server. But it also can act as service requester of the database services.

With the three-tiered architecture shown in Fig. 2, each group can be set up to support demands of its functions. The database server can contain the database. Application servers can include the processing logic of the system, including services such as spooling, patching user requests, and formatting data. The tasks related to the presentation of the data can be handled by the presentation servers, which can typically be personal computers or workstations, enabling easy access to the system. Communication among the three tiers or server types can be accomplished with the use of standard protocol services mentioned above, such as the ones provided by TCP/IP or CPIC. CPIC stands for Common Programming Interface Communication and includes standard functions and services for program-to-program communication.

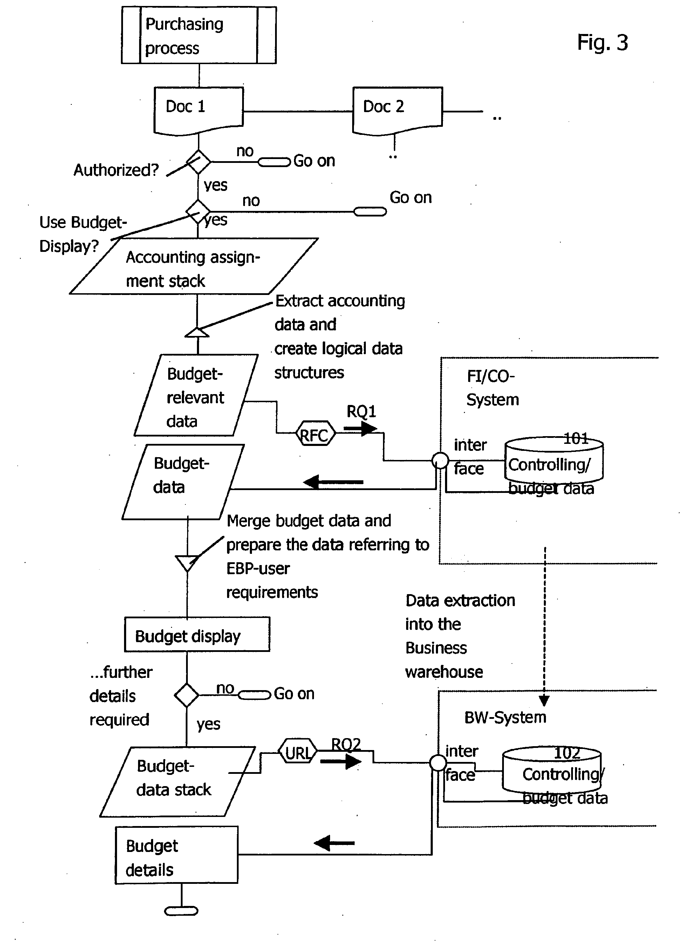

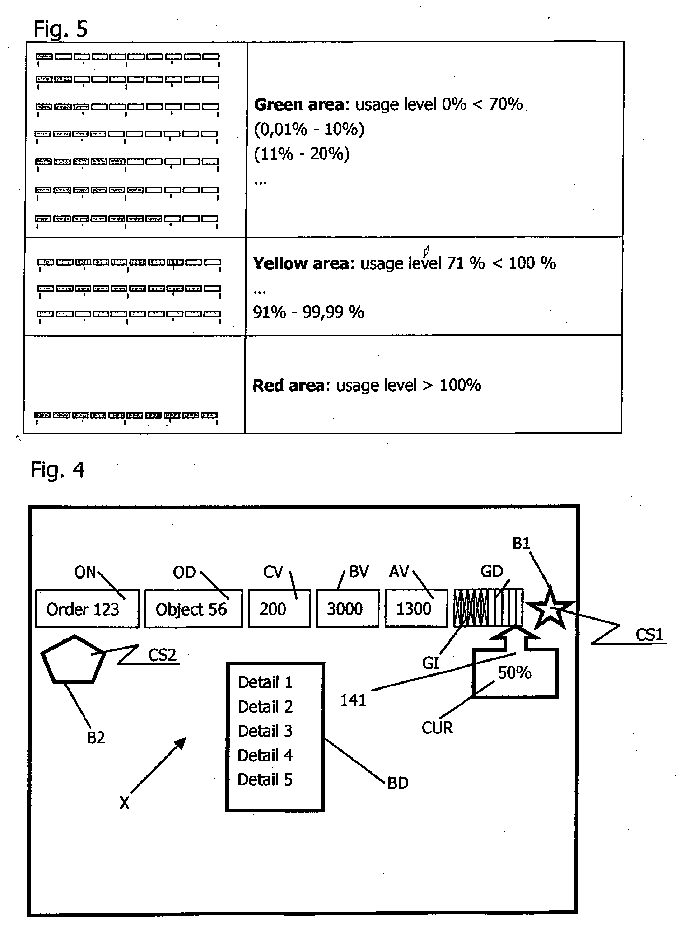

In the following, the present invention will exemplarily be set forth with reference to the flowchart shown in Fig. 3 and a graphical user interface GUI (see Fig. 4) to provide a network-based solution erected on a network topology that supports the implementation of a secure and reliable access control mechanism. The network topology and access methodology according to the invention can be implemented regardless of the nature of the data that are hosted, stored, processed, etc.

The invention is explained in relation to a purchasing process hereinafter. In such a purchasing process requirement coverage requests for goods or services are processed and follow-on documents (purchase orders, goods receipt or service confirmations) are created in the system. It is understood that the invention can be used in totally different scenarios while providing the same advantages and benefits as in the present embodiment.

On the computer workstation 100, a client software application is resident that includes a first program code portion for generating the graphical user interface GUI as it is shown in an exemplary way in Fig. 4. The graphical user interface GUI has several control elements, that are so-called buttons (i.e. confined areas) on the display that can be operated by a mouse pointer 141 that follows the movements carried out by the graphical input unit 140 (see Fig.1). As indicated in Fig. 3, in a first step, a document Doc 1 is initiated or opened in the purchasing process. The program provides for an authorization check of the current user with respect to the current document Doc 1. If the user authorization is positive, the user can enter an order number ON and an object designator OD, an a cost value CV in the respective fields of the GUI shown in Fig. 4. The client software application provides a first control element, i.e. an above-described button B1, on the display for activating a program code portion of the CPP. If the user has activated this button B1 to obtain the budget display, a first control signal CS1 is generated in order for additional data, i.e. a budget value (BV) being presented on the GUI displayed on the graphical output device 150. All of these displayed date are part of a data object X containing these data items that represent this purchase order.

Subsequently, the available data is pushed on an accounting assignment stack for further processing. This further processing includes extracting the accounting data and create logical data structures that allow for a generating a first request RQ1 to a first database 101 in order to obtain additional numerical information, especially the actually assigned budget AB related to the data object. This first request RQ1 includes information that characterises the data object in order to allow for an identification of additional numerical information related to the data object available in the first database 101.

The first request RQ1 providing the information identifying the data object X to the first database 101 in the format of a Remote Function Call RFC. It is also possible to use the format of a unique resource locator (URL), a unique resource identifier (URI), hyper text markup language (HTML), extensible markup language (XML), extensible hyper text markup language (XHTML), wireless application markup language (WML), Electronic Data Interchange (EDI), or via an application programming interface (API).

The first data base 101 contains the controlling/budget data of a finacial controlling system (FI/CO-System). The return function call RFC obtains the data from the first data base 101 of the FI/CO-System and provides the additional numerical information, i.e. in this instance the actually assigned budget AB stored in the first data base 101 via the computer network 190. The actually assigned budget AB is merged with the budget data to complete the data object X. Then the data is processed and prepared in accordance with the user requirements and displayed on the GUI displayed on the graphical output device 150. This processing includes calculating the percentage of the budget "used" by the assigned budget AB plus the cost value CV and providing this percentage as a numerical result NR. This numerical result NR is displayed on the graphical output device 150 in a display field GD indicating a current value CUR.

The generated numerical result NR presented in the display field GD on the graphical output device 150 is presented as a graphic indicator GI forming a graphical bar display. The current value CUR is indicated as a change in color and length of the bar in the graphical bar display.

If the current value CUR exceeds certain predetermined values relative to the budget, not only the lenght, but also the color of the entire bar changes. This is exemplified in Fig. 5.

If the user locates the moise pointer 141 in close proximity to the graphic indicator GI a numerical presentation of the current value CUR is displayed in field of the moise pointer 141.

The software application further includes a program code portion for providing a second control element B2, i.e. an above-described button, or a scroll-bar on the display related to the presented data object X which generates another control signal CS2 in the computer 100 when the second control element B2 is activated by the user by means of the mouse input device 140. Upon generation of the second control signal CS2, another request RQ2 is produced in the computer in order to obtain additional information related to the data object from a second data base 102. This second request RQ2 includes information that characterises the data object in order to allow for an identification of additional, e.g. historical information information related to the data object available in the second database 102.

To this end, the available data is pushed on a budget data stack for further processing. This further processing includes extracting the budget data and create logical data structures that allow for a generating the second request RQ2 to the second database 102.

The second request RQ2 providing the information identifying the data object X to the second database 102 has the format of a unique resource locator (URL). It is also possible to use the format of a Remote Function Call RFC, a unique resource identifier (URI), hyper text markup language (HTML), extensible markup language (XML), extensible hyper text markup language (XHTML), wireless application markup language (WML), Electronic Data Interchange (EDI), or via an application programming interface (API).

The second data base 102 contains the controlling/ budget data of a business warehouse system (BW-System). The unique resource locator URL obtains the data from the second data base 102 of the BW-System and provides the additional data, i.e. in this instance the budget details stored in the second data base 101 via the computer network 190. The budget details are merged with the already available budget data to complete the data object X. Then the data is processed and prepared in accordance with the user requirements and displayed on the GUI displayed on the graphical output device 150.

The generation of the second request RQ2 to the second database 102) in order to obtain the additional information related to the budget of interest includes information characterising the budget of interest to allow for an identification of additional information related to that budget available in the second database 102 upon generation of the second control signal CS2.

The invention as implemented in the computer system essentially teaches to provide a device in a computer to generate a request to a first database in order to obtain additional numerical information related to a data object representing a subject of interest to a user, with partial information related to the subject of interest already being presented to the user. The request includes information sufficiently characterising the subject of interest to allow for an identification of additional information related to the subject of interest available in the first database. This request is submitted by a device in the computer to the database. The received additional information is processed by a device in the computer in order to generate a result which in turn is displayed indicating a current value in relation to a predetermined value related to the data object of the subject of interest to the user.

This approach ascertains that the data is presented to the user in the right format at the right point of the process, e.g. a purchasing or resource handling process. It speeds up the decision making enormously e.g. during the approval of postings or the routing of goods in a factory. There are no breaks in medium i.e. the whole process occurs to the user in one system in the same subscreen. Efforts in logging on into a different system are not necessary.The data, e.g. the budget data can be prepared and calculated in accordance with user needs. The following data can be displayed and/or calculated, respectively: the original object, e.g. an accounting object, any object from which the data, e.g. the budget data was actually read (e.g. if the data, (the budget data) was inherited bottom up, other (accounting) objects were derived due to special data base (FI/CO-system) logic settings, the current value of the document (e.g. the value of the purchased document), the (budget) value from the database (FI/CO-) system, the (budget) value used or spent in terms of values already assigned to the (budget) object plus the value of the current document, a graphic bar to display the usage level of the (budget) value, the actual usage level in percent appears if the cursor is located on the bar. Finally, a detail icon to start a (data warehouse) report can be provided.

While the invention has been described with reference to a preferred embodiment, those skilled in the art will understand that various changes may be made and equivalents may be substituted without departing from the scope of the invention. In addition, many modifications may be made to adapt a particular step or structure to the teachings of the invention without departing from its scope. Therefore, it is intended that the invention not be limited to the particular embodiment disclosed, but that the invention will include all embodiments falling within the scope of the appended claims.

## Claims

1. A computer-implemented method of accessing, processing, and outputting data in a computer network (190), providing a computer program product (CPP) capable of
- presenting on a graphical output device (150) a data object (X) containing one or more data items (ON, OD, CV ...) related to a subject of interest to the user;
- providing on said graphical output device (150) a first control element (B1) in relation to said presented data object (X), said first control element (B1) being arranged to be activated by means of a user-operated input device (140) in order to generate a first control signal (CS1);
- upon generation of said first control signal (CS1), generating a first request (RQ1) to a first database (101) in order to obtain additional numerical information (AB) related to said subject of interest, said first request (RQ1) including information sufficiently characterising said subject of interest to allow for an identification of additional numerical information (AB) related to said subject of interest available in said first database (101);
- submitting said first request (RQ1) to said first database (101) via said computer network (190);
- receiving said additional numerical information (AB) related to said item of interest via said computer network (190) from said first database (101);
- processing said received information (AB) in order to generate a numerical result; and
- displaying said generated numerical result (NR) on said graphical output device (150) in a display (GD) indicating a current value (CUR) in relation to a predetermined maximum and/or a minimum value (MAX, MIN) related to said data object (X) of the subject of interest to the user.

2. The computer-implemented method according to claim 1, wherein displaying said generated numerical result (NR) on said graphical output device (150) includes presenting a graphic indicator (GI) in said display (GD) indicating a range between said predetermined maximum and said predetermined minimum value (MAX, MIN) as a graphical object/element wherein said current value (CUR) is indicated as a change in color, size, shape, or texture of said graphical object/element.

3. The computer-implemented method according to claim 2, wherein displaying said graphic indicator (GI) includes that a first portion of said graphical bar representing a first subrange between said predetermined minimum value (MIN) and said current value (CUR) has a first color, size, shape, or texture, and that a second portion of said graphic indicator (GI) representing a second subrange between said predetermined maximum value (MAX) and said current value (CUR) has a second color, size, shape, or texture.

4. The computer-implemented method according to claim 3, wherein displaying said graphic indicator (GI) in said display (GD) includes that the color, size, shape, or texture of the first and/or the second portion changes if said current value (CUR) exceeds certain predetermined values relative to said predetermined minimum value (MIN) and/or said predetermined maximum value (MAX).

5. The computer-implemented method according to any of claims 1 - 4, wherein displaying said graphic indicator (GI) in said display (GD) includes displaying a numerical presentation of said current value (CUR) in close proximity to said graphic indicator (GI) if said input device (140) is user-operated to identify said graphic indicator (GI).

6. The computer-implemented method according to any of claims 1 - 5, wherein generating said first request (RQ1) includes at least providing an accounting assignment identification and an amount related to said subject of interest, in order to allow for an identification of a total amount and an assigned amount in said first database (101).

7. The computer-implemented method according to any of claims 1 - 6, wherein generating said first request (RQ1) includes providing the information identifying said subject of interest to said first database (101) in the format of a unique resource locator (URL), a unique resource identifier (URI), hyper text markup language (HTML), extensible markup language (XML), extensible hyper text markup language (XHTML), wireless application markup language (WML), Electronic Data Interchange (EDI), a Remote Function Call (RFC), or via an application programming interface (API).

8. The computer-implemented method according to any of claims 1 - 7, wherein receiving said additional numerical information (AB) from said first database (101); includes receiving the information in the format of a unique resource locator (URL), a unique resource identifier (URI), hyper text markup language (HTML), extensible markup language (XML), extensible hyper text markup language (XHTML), wireless application markup language (WML), Electronic Data Interchange (EDI), a Remote Function Call (RFC), or via an application programming interface (API).

9. The computer-implemented method according to any of claims 1 - 8, further including
- providing of a second control element (B2) in relation to said presented data object (X) on said graphical output device (150), said second control element (B2) being arranged to be activated by means of the user-operated input device (140) in order to generate a second control signal (CS2); and
- displaying further, e.g. historical information related to said subject of interest requested and received at least partially from said first or a second database (102) upon generation of said second control signal (CS2).

10. The computer-implemented method according to any of claims 1 - 9, further including
- a checking procedure regarding the authorization of the user to access and/or visualize the additional information received at least partially from said database (102) prior to providing the first and/or the second control elements (B1, B2) on said graphical output device (150).

11. The computer-implemented method according to any of claims 1 - 10, further including
- generating a second request (RQ2) to a second database (102) in order to obtain additional information (X3) related to said subject of interest, said second request (RQ2) including information sufficiently characterising said subject of interest to allow for an identification of additional information (BD) related to said subject of interest available in said said second database (102) upon generation of said second control signal (CS2);
- submitting said second request (RQ2) to said second database (102) via said computer network (190);
- receiving said additional information (BD) related to said item of interest via said computer network (190) from said second database (102); and
- processing said received information (BD) in order to visualize the additional information received at least partially from said second database (102) on said graphical output device (150).

12. A computer-implemented system for accessing, processing, and outputting data in a computer network (190) comprising at least one computer (100) that can be operated by a user and that is suited to run an application software program in accordance with user input actions, provided with a computer program product capable to generate a request to a first database in order to obtain numerical information related to a data object representing a subject of interest to a user, while some information related to the subject of interest already being presented to the user; the request includes information sufficiently characterising the subject of interest to allow for an identification of said information related to the subject of interest available in the first database; this request is being submitted to the database; the received additional information is being processed in order to generate a result which in turn is displayed indicating a current value in relation to a predetermined value related to the data object of the subject of interest to the user.
